(19) Europäisches Patentamt

European Patent Office

Office européen des brevets

(11) **EP 0 821 025 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(51) Int Cl.[7]: **C08J 7/04**, C09D 165/00, C08G 61/12

(21) Anmeldenummer: **97110633.1**

(22) Anmeldetag: **30.06.1997**

(54) **Flexible, tiefziehbare, elektrisch leitfähige Folien**

Flexible deep-drawable electrically conductive films

Pellicules flexibles emboutissables et conduisant l'électricité

(84) Benannte Vertragsstaaten:
**DE FR GB IT**

(30) Priorität: **11.07.1996 DE 19627904**
**30.07.1996 DE 19630669**
**08.01.1997 DE 19700365**

(43) Veröffentlichungstag der Anmeldung:
**28.01.1998 Patentblatt 1998/05**

(73) Patentinhaber:
• **BAYER AG**
**51368 Leverkusen (DE)**
• **WOLFF WALSRODE AG**
**29655 Walsrode (DE)**

(72) Erfinder:
• **Müller, Harry, Dr.**
**90765 Fürth (DE)**
• **Schultze, Dirk**
**Hadley, MA 01035 (US)**
• **Jonas, Friedrich, Dr.**
**52066 Aachen (DE)**
• **Lerch, Klaus, Dr.**
**47800 Krefeld (DE)**
• **Weber, Hans**
**41569 Rommerskirchen (DE)**

(56) Entgegenhaltungen:
EP-A- 0 564 911    EP-A- 0 593 111
EP-A- 0 752 454    EP-A- 0 767 009

• **JONAS F ET AL: "TECHNICAL APPLICATIONS FOR CONDUCTIVE POLYMERS" ELECTROCHIMICA ACTA, Bd. 39, Nr. 8/09, 1. Juni 1994, Seiten 1345-1347, XP000570304**
• **PATENT ABSTRACTS OF JAPAN vol. 097, no. 006, 30. Juni 1997 & JP 09 031222 A (TEIJIN LTD), 4. Februar 1997**
• **PATENT ABSTRACTS OF JAPAN vol. 097, no. 009, 30. September 1997 & JP 09 131843 A (TEIJIN LTD), 20. Mai 1997**

**Beschreibung**

Gegenstand der Erfindung sind flexible, elektrisch leitfähige Folien in Dicken von 10 bis 1 000 µm, bevorzugt 50 bis 400 µm, welche thermisch oder mechanisch verformt werden können, hohe Transparenz besitzen und deren Wirkung unabhängig von der Luftfeuchte ist. Die Folien sind gekennzeichnet durch eine transparente antistatische Beschichtung aus einem Gemisch des 3,4-Polyethylendioxythiophens mit einem thermisch oder mechanisch verformbaren Bindemittel. Als Polymerfolien kommen alle tiefziehbaren Folien (z. B. PA, PC, PU, PVC, PET, PEN, PS, PMMA, PP, PE) in Frage. Anwendungen finden die erfindungsgemäßen Folien z.B. zur Verpackung von elektronischen Bauteilen, bei denen es auf einen Schutz gegen elektrostatische Entladungen in besonderem Maße ankommt.

Die Verwendung von elektrisch leitfähigen, antistatischen Folien zur Verpackung von empfindlichen Füllgütern ist seit langem bekannt. So werden z.B. zur Verpackung elektronischer Bauteile oder Bauteilgruppen (z.B. Transistoren und integrierte Schaltkreise) elektrisch leitfähige Folien eingesetzt, um die Gefahr einer elektrostatischen Entladung, welche eine Zerstörung der elektronischen Bauteile bewirken könnte, zu minimieren. Schon Spannungen unter 100V können zu irreversiblen Schädigungen führen und die Bauteile unbrauchbar machen. Bedingt durch die zunehmende Miniaturisierung bei elektronischen Bauteilen werden deren Empfindlichkeit und der notwendige Schutz vor elektrostatischen Entladungen immer dringlicher.

Bei der Bestückung von Leiterplatinen beispielsweise werden die elektronischen Bauteile über sogenannte Blistergurte, d.h. tiefgezogene Foliengurte, welche die Bauteile enthalten und mit schmalen Abdeckbändern verschlossen sind, den Verarbeitungsmaschinen mit sehr hohen Geschwindigkeiten zugeführt. Bei diesem Verarbeitungsprozeß laden sich Verpackungsfolien aus organischen Polymeren aufgrund der auftretenden Reibung auf Spannungen bis zu einigen Kilovolt auf, was einerseits zu einem starken Haften der leichten Bauteile an der Verpackungsfolie, bzw. durch nachfolgende Entladungsvorgänge zu einer Zerstörung der Bauteile führen kann. Ein Schutz vor Aufladung ist bei dieser Anwendung zwingend erforderlich.

Ebenso ist ein Schutz vor elektrostatischen Entladungen bei brennbaren oder explosiven Füllgütern unbedingt notwendig. Auch zur Verpackung dieser kritischen Füllgüter können die erfindungsgemäßen Folien eingesetzt werden.

Es ist Stand der Technik, zur Verpackung von durch elektrostatische Entladungen gefährdeten Füllgütern (z.B. elektronische Bauteile) die eingesetzten polymeren Verpackungsfolien antistatisch auszurüsten. Dies kann entweder durch eine Oberflächenbeschichtung oder durch direktes Einarbeiten einer leitfähigen Substanz (z.B. Leitruß) oder eines ionischen Antistatikums in das jeweilige Polymer erfolgen. Im Falle des Einsatzes von Leitruß wird die Leitfähigkeit ab einem bestimmten Füllgrad mit Ruß (Perkolationspunkt) durch das sich ausbildende Ruß-Netzwerk innerhalb der Kunststoff- Polymermatrix bewirkt.

Rußgefüllte Verpackungsfolien besitzen zwar gute elektrische/antistatische Eigenschaften, haben aber den Nachteil, daß sie nicht transparent sind und somit den Blick auf das verpackte Füllgut verhindern. Weiterhin sind rußgefüllte Folien nur begrenzt tiefziehbar, da bei zu starker Verstreckung, vor allem in den Ekken von z.B. Blisterverpackungen, das notwendige Ruß-Netzwerk aufreißt und dadurch die Leitfähigkeit verloren geht.

Werden den Polymeren ionische Antistatika beigemischt, so sind die resultierenden Verpackungsfolien zwar transparent, die Antistatika wirken aber nur bei hoher Luftfeuchte.

Aus EP-A 302 304 und EP-A 339 340 ist bekannt, zur Herstellung von Blistergurten Polycarbonatfolien einzusetzen, die mit elektrisch leitfähigen Polymeren transparent und antistatisch beschichtet sind. Dafür geeignet sind z.B. Polypyrrol und Polythiophene wie 3,4-Polyethylendioxythiophen. Die Herstellung dieser Beschichtungen ist bekannt und nutzt die Polymerisation der den leitfähigen Polymeren zugrundeliegenden Monomeren auf der Folienoberfläche mittels geeigneter Oxidationsmittel wie Eisen(III)-salzen. Zur Herstellung der antistatischen Beschichtung sind hier allerdings mehrere Verfahrensschritte erforderlich und nach der Polymerisation muß das Oxidationsmittel z.B. mit Wasser aus der Beschichtung entfernt werden.

Es ist auch bekannt (vgl. EP-A 440 957) Folien mit Lösungen oder Dispersionen von leitfähigen Polythiophenen speziell des 3,4-Polyethylendioxythiophens transparent und antistatisch zu beschichten. Diese Schichten können allerdings nicht mechanisch oder thermisch verformt werden.

Es stellte sich daher die Aufgabe, eine flexible, elektrisch leitfähige Folie herzustellen, die weitgehend transparent, feuchtigkeitsunabhängig und thermisch bzw. mechanisch verformbar ist und damit deutliche Vorteile gegenüber dem bisherigen Stand der Technik aufweist.

Erfindungsgemäß gelang dies durch Beschichten von Polymerfolien mit Lösungen und Dispersionen des 3,4-Polyethylendioxythiophens, die mit speziellen organischen Bindemitteln kombiniert wurden. Polymerfolien mit diesen transparenten antistatischen Beschichtungen sind thermisch und/oder mechanisch verformbar.

Die Herstellung der erfindungsgemäß zu verwendenden Lösungen bzw. Dispersionen des 3,4-Polyethylenthioxythiophens ist in DE-OS 4 211 459 beschrieben.

Als Bindemittel sind solche geeignet, die bei der thermischen Verformung der beschichteten Polymeren selbst leicht verformbar, d.h. weich sind. Bevorzugt werden daher Bindemittel, deren Erweichungstemperatur unter der Erweichungstemperatur des beschichteten Polymers liegt. Bei der mechanischen Verformung müssen die Polymerschichten hohe Reißdehnungen, bevorzugt >100 % aufweisen.

Beispiele für geeignete Bindemittel für das erfindungsgemäße Verfahren sind Lösungen und Dispersionen von Homo- und Copolymeren des Vinylacetats, Vinylidenchlorids, Methylmethacrylats, anderer Acrylate sowie Mischungen daraus.

Besonders geeignet sind Polyurethanlatices.

Bevorzugt werden wässrige Lösungen oder Dispersionen verwendet.

Bezogen auf den Feststoffgehalt an leitfähigen Polymer enthalten die Beschichtungslösungen 50 bis 4000Gew.-% an festem Bindemittel, bevorzugt 100 bis 2 000 Gew.-%.

Die Beschichtungslösungen können außer Wasser mit Wasser mischbare organische Lösungsmittel wie niedere Alkohole, Methanol, Ethanol, Isopropanol, organische Amide, Dimethylformamid, Dimethylacetamid, N-Methylpyrrolidon, N-Methylcaprolactam, Ketone, Aceton, Methylethylketon, Diacetonalkohol, Ether, Tetrahydrofuran, Dioxan enthalten.

Auch Zusätze zur Erhöhung der Leitfähigkeit (z.B. Sorbitol) sind möglich (vgl. EP-A 686 662).

Der Gesamtfeststoffgehalt der Beschichtungslösungen liegt üblicherweise - in Abhängigkeit von dem verwendeten Beschichtungsverfahren und der zu erzielenden Beschichtungsdicke - zwischen 0,1 und 50 Gew.-%.

Geeignete Beschichtungsverfahren sind z.B. Sprühen, Drucken (Tiefdruck, Offsetdruck, Siebdruck), Walzenantragverfahren, Vorhanggießen, Rakelverfahren.

Die Trockenschichtdicke liegt üblicherweise zwischen 0,05 und 100 $\mu$m, bevorzugt 0,5 und 50 $\mu$m.

Die Dicke der Folien liegt üblicherweise zwischen 10 und 1 000 $\mu$m, bevorzugt 50 und 400 $\mu$m.

Die polymeren Trägerfolien können z.B. aus folgenden thermoplastischen Polymeren bestehen:

| | |
|---|---|
| PA = | Polyamid |
| PC = | Polycarbonat |
| PU = | Polyurethan |
| PVC = | Polyvinylchlorid |
| A-PET = | amorphes Polyethylenterephthalat |
| PEN = | Polyethylennaphthalat |
| PS = | Polystyrol |
| PMMA = | Polymethylmethacrylat |
| PP = | Polypropylen |
| PE = | Polyethylen |

Es können auch Blends dieser Polymere verwendet werden. Weiterhin sind Copolymere der diesen Polymeren zugrunde liegenden Monomere geeignet.

Die Kunststoff-Trägerfolien können ein- oder auch mehrschichtig sein, wobei einzelne Schichten mittels üblicher Kaschierklebstoff- oder Haftyermittler-Zwischenschichten untereinander verbunden sind.

Die Kunststoff-Trägerfolien können in ihren einzelnen Schichten die bei der Folienverarbeitung üblichen Additive und Hilfsmitteln, wie z.B. Gleitmittel, Antiblockmittel, Antistatika, $TiO_2$, $CaCO_3$ enthalten.

Das thermische Verformen z.B. durch Tiefziehen oder mittels Stempeln erfolgt bei Temperaturen bei denen die Folienmaterialien erweichen aber noch nicht schmelzen.

### Beispiele

### Herstellung der 3,4-Polyethylendioxythiophenlösung

20 g freie Polystryrolsulfonsäure ($\overline{M}_n$ ca. 40 000), 21,4 g Kaliumperoxodisulfat und 50 mg Eisen(III)-sulfat werden unter Rühren in 2 000 ml Wasser vorgelegt. Unter Rühren werden 8,0 g 3,4-Ethylendioxythiophen zugegeben. Die Lösung wird 24 Stunden bei Raumtemperatur gerührt. Anschließend werden 100 g Anionenaustauscher (Handelsprodukt Bayer AG Lewatit MP 62) und 100 g Kationenaustauscher (Handelsprodukt Bayer AG Lewatit S 100), beide wasserfeucht, zugegeben und 8 Stunden gerührt.

Die Ionenaustauscher werden durch Filtration entfernt. Es wird eine gebrauchsfertige 3,4-Polyethylendioxythiophen-Lösung mit einem Feststoffgehalt von ca. 1,2 Gew.-% erhalten.

### Vergleichbeispiel

Die oben beschriebene 3,4-Polyethylendioxythiophenlösung wird auf eine 200 $\mu$m dicke Polycarbonatfolie von 30x30 cm$^2$ aufgerakelt, so daß eine Trockenschichtdicke von 100 mg/m$^2$ resultiert. Die beschichtete Folie hat einen Oberflächenwiderstand von $10^4$ $\Omega$/□. Die Folie wird anschließend durch Tiefziehen bei ca. 180°C verformt. Nach dem Tiefziehen weist die antistatische Beschichtung Risse auf und hat an den verformten Stellen einen Oberflächenwiderstand von >$10^{10}$ $\Omega$/□. Die antistatische Wirkung ist durch den Tiefziehprozeß zerstört worden.

### Beispiel 1

Eine Mischung aus 6,5 g der oben beschriebenen 3,4-Polyethylendioxythiophenlösung, 3,0 g Dimethylacetamid 10,0 g Aceton, 5,0 g Methanol, 3,0 g N-Methylpyrrolidon und 2,5 g Polyvinylacetat (Mowilith 50 Handelsprodukt der Fa. Hoechst) 30 %ig in Aceton wird auf eine 200 $\mu$m dicke Polycarbonatfolie in ca. 60 $\mu$m Naßschichtdicke aufgerakelt und getrocknet. Die beschichtete Folie hat einen Oberflächenwiderstand von $10^4$ $\Omega$/□. Die Folie wird anschließend durch Tiefziehen bei ca. 180°C verformt. Nach dem Tiefziehen weist die antistatische Beschichtung an den verformten Stellen einen Oberflächenwiderstand von $10^4$ - $10^5$ $\Omega$/□auf. Die

antistatische Wirkung der Schicht ist durch das Tiefziehen nicht negativ beeinflußt worden.

**Beispiel 2**

Eine Mischung aus 8,3 g der oben beschriebenen 3,4-Polyethylendioxythiophenlösung, 2,3 g einer 40 %igen wässrigen Polyurethanlösung (Bayderm Finish UD Handelsprodukt der Bayer AG) und 0,5 g N-Methylpyrrolidon wird in einer Naßschichtdicke von ca. 60 µm auf eine 150 µm dicke Polycarbonatfolie aufgerakelt und getrocknet. Die beschichtete Folie hat einen Oberflächenwiderstand von $10^3$ $\Omega/\square$ Die Folie wird anschließend durch Tiefziehen bei ca. 180°C verformt. Nach dem Tiefziehen weist die antistatische Beschichtung an den verformten Stellen einen Oberflächenwiderstand von $10^4$ - $10^5$ $\Omega/\square$ auf. Die antistatische Wirkung der Schicht ist nach dem Tiefziehen erhalten geblieben.

**Beispiel 3**

Gearbeitet wird wie in Beispiel 2 aber die Polycarbonatfolie durch eine 200 µm dicke Folie aus Polyvinylchlorid ersetzt. Die beschichtete Folie hat einen Oberflächenwiderstand von 3 x $10^3$ $\Omega/\square$ Die Folie wird anschließend durch Tiefziehen bei ca. 180°C verformt. Nach dem Tiefziehen weist die antistatische Beschichtung an den verformten Stellen einen Oberflächenwiderstand von 2 x $10^4$ $\Omega/\square$ auf. Die antistatische Wirkung der Schicht ist nach dem Tiefziehen erhalten geblieben.

**Patentansprüche**

1. Thermisch und mechanisch verformbare Polymerfolie **gekennzeichnet durch** eine transparente antistatische Beschichtung aus einem Gemisch des 3,4-Polyethylendioxythiophens mit einem thermisch oder mechanisch verformbaren Bindemittel.

2. Folie gemäß Anspruch 1, **dadurch gekennzeichnet, daß** die Polymerfolie einoder mehrschichtig sein kann, wobei einzelne Schichten über Klebstoff- oder Haftvermittler- Zwischenschichten untereinander verbunden sind.

3. Polymerfolie gemäß einem der Ansprüche 1 und 2, **dadurch gekennzeichnet, daß** sie als Bindemittel ein Polyurethan enthält.

4. Verwendung der Polymerfolie gemäß einem der Ansprüche 1 bis 3 zur Verpackung elektrostatisch gefährdeter Bauteile.

5. Verwendung der Polymerfolie gemäß einem der Ansprüche 1 bis 3 zur Herstellung von Blistergurten zur Verpackung elektrostatisch gefährdeter Bauteile.

6. Verwendung der Polymerfolie gemäß einem der Ansprüche 1 bis 3 zur Verpackung feuergefährlicher oder explosiver Füllgüter.

**Claims**

1. A thermally and mechanically formable polymer film, **characterized by** a transparent antistatic coating of a mixture of 3,4-polyethylenedioxythiophene with a thermally or mechanically formable binder.

2. Film according to Claim 1, **characterized in that** the polymer film may be single-layer or multilayer, where individual layers have been bonded to one another by way of intermediate layers made of adhesive or made of adhesion promoter.

3. Polymer film according to Claim 1 or 2, **characterized in that** it comprises a polyurethane as binder.

4. Use of the polymer film according to any of Claims 1 to 3 for packaging components which are vulnerable to electrostatic effects.

5. Use of the polymer film according to any of Claims 1 to 3 for producing blister tapes for packaging components which are vulnerable to electrostatic effects.

6. Use of the polymer film according to any of Claims 1 to 3 for packaging contents which pose a fire-related risk or are explosive.

**Revendications**

1. Feuille de polymère apte au formage thermique et mécanique, **caractérisée en ce qu'**elle porte un revêtement antistatique transparent consistant en un mélange de 3,4-polyéthylènedioxythiophène et d'un liant apte au formage thermique ou mécanique.

2. Feuille selon revendication 1, **caractérisée en ce que** la feuille de polymère peut être à une ou plusieurs couches, les couches individuelles étant alors associées entre elles par des couches intermédiaires de colle ou d'agent d'adhérence.

3. Feuille de polymère selon l'une des revendications 1 et 2, **caractérisée en ce qu'**elle contient en tant que liant un polyuréthanne.

4. Utilisation de la feuille de polymère selon l'une des revendications 1 à 3 pour l'emballage de pièces de construction exposées à des risques de charges électrostatiques.

**5.** Utilisation de la feuille de polymère selon l'une des revendications 1 à 3 pour la fabrication de bandes à bulles pour l'emballage de pièces de construction exposées à des risques de charges électrostatiques.

**6.** Utilisation de la feuille de polymère selon l'une des revendications 1 à 3 pour l'emballage de matières inflammables ou explosives.